# EUROPÄISCHE PATENTSCHRIFT

(11) **EP 3 014 220 B1**
(45) Veröffentlichungstag und Bekanntmachung des Hinweises auf die Patenterteilung: **06.02.2019**
(21) Anmeldenummer: 14727711.5
(22) Anmeldetag: 24.05.2014
(51) Int. Cl.: G01P 1/02, G01P 3/487, G01P 3/488, G01D 11/24

(54) **SENSORANORDNUNG ZUR ERFASSUNG EINER RADDREHZAHL EINES FAHRZEUGS, RADDREHZAHLERFASSUNGSSYSTEM FÜR EIN FAHRZEUG UND FAHRZEUG DAMIT SOWIE VERWENDUNG EINER DERARTIGEN SENSORANORDNUNG**
SENSOR ARRANGEMENT FOR DETECTING A WHEEL SPEED OF A VEHICLE, WHEEL SPEED DETECTION SYSTEM FOR A VEHICLE AND VEHICLE THEREWITH AND USE OF SUCH A SENSOR ARRANGEMENT
AGENCEMENT DE DÉTECTION PERMETTANT DE DÉTECTER LA VITESSE DE ROTATION D'UNE ROUE D'UN VÉHICULE, SYSTÈME DE DÉTECTION DE LA VITESSE DE ROTATION D'UNE ROUE D'UN VÉHICULE ET VÉHICULE MUNI DUDIT AGENCEMENT, AINSI QUE UTILISATION DUDIT AGENCEMENT DE DÉTECTION

(30) Priorität: 29.06.2013 DE 102013010925
(43) Veröffentlichungstag der Anmeldung: 04.05.2016
(73) Patentinhaber: WABCO GmbH, 30453 Hannover (DE)
(72) Erfinder: KÜSTER, Klaus, 30455 Hannover (DE)
(74) Vertreter: Lauerwald, Jörg
(86) Internationale Anmeldenummer: PCT/EP2014/001408
(87) Internationale Veröffentlichungsnummer: WO 2014/206516

(56) Entgegenhaltungen:
- EP-A1- 2 322 811
- EP-A2- 2 211 396
- DE-A1- 3 919 109
- DE-A1- 19 758 075
- DE-A1-102007 008 744
- DE-A1-102008 064 047

## Beschreibung

Die Erfindung betrifft eine Sensorvorrichtung zur Erfassung einer Raddrehzahl eines Fahrzeugs, insbesondere eines Nutzfahrzeugs. Dabei weist die Sensorvorrichtung einen stabförmigen Sensorträger sowie einen in den Sensorträger eingebrachten Sensor auf, welcher zur Erfassung der Raddrehzahl die Drehung eines mit dem Rad mitdrehenden Polrades sensiert.

Weiter betrifft die Erfindung eine Sensoranordnung zur Erfassung einer Raddrehzahl eines Fahrzeugs, wobei die Sensoranordnung eine Klemmbuchse sowie eine in die Klemmbuchse festgeklemmte Sensorvorrichtung aufweist. Ferner betrifft die Erfindung ein Raddrehzahlerfassungssystem, insbesondere für Fahrerassistenzsysteme in Fahrzeugen sowie ein Fahrzeug damit, wobei das Raddrehzahlerfassungssystem mindestens eine erfindungsgemäße Sensorvorrichtung aufweist.

Schließlich betrifft die Erfindung ein Verfahren zur Herstellung einer erfindungsgemäßen Sensorvorrichtung und die Verwendung einer erfindungsgemäßen Sensorvorrichtung zur Erfassung der Raddrehzahl eines Fahrzeugs.

EP 2 211 396 A2 und DE 10 2008 064 047 A1 zeigen jeweils einen Drehzahlsensor mit einem Sensorelement und einem Trägerelement, wobei diese Sensorvorrichtungen mit einem Kunststoff zumindest teilweise umspritzt sind. Derartige Sensorvorrichtungen lassen sich jedoch nicht in eine herkömmlich verwendete Klemmbuchse für die Befestigung in einer Halteöffnung einklemmen.

Eine gemäß dem Stand der Technik bekannte Sensorvorrichtung ist beispielsweise DE 32 15 212 A1 zu entnehmen. Die Sensorvorrichtung ist herkömmlicherweise stabförmig ausgebildet und weist im Sensorkopf einen Sensor auf, welcher derart ausgestaltet ist, um die Drehbewegung eines Polrades zu erfassen. Dazu wird diese bekannte Sensorvorrichtung mittels einer separaten Klemmbuchse in einer im Bereich des Rades angeordneten Halteöffnung festgeklemmt. Bei der Halteöffnung handelt es sich bevorzugt um ein Loch oder eine Bohrung, in welche die Klemmbuchse eingeschoben wird.

Die Montage der Sensorvorrichtung erfolgt, indem die Sensorvorrichtung bis zum Kontakt mit dem Polrad in die Klemmbuchse eingeschoben und durch die Reibkraft in der Klemmbuchse gehalten wird. Die Sensorvorrichtung ist jedoch axial in der Klemmbuchse verschiebbar, so dass die Sensorvorrichtung beim Gegenlaufen des Polrades nicht beschädigt wird und trotzdem innerhalb der Klemmbuchse gehalten wird.

Der bekannte Stabsensor ist üblicherweise zylindrisch ausgebildet und weist eine geschlossene Manteloberfläche auf. Der Sensor zur Erfassung der Raddrehzahl wird im Innern der Mantelfläche durch eine Vergussmasse gehalten.

Dabei ist zu beachten, dass innerhalb des Sensoreinbauraumes, insbesondere während und nach einer Bremsung, erhöhte Strahlungswärme zum Sensor geführt wird. Diese Strahlungswärme kann kurzzeitig auftreten oder auch länger andauern. Derartige Temperaturschwankungen können sich ungünstig auf die Haltekräfte des Stabsensors innerhalb der Klemmbuchse auswirken, so dass die Sensorvorrichtung innerhalb der Klemmbuchse wandern kann, wodurch sich in unerwünschter Weise der Luftspalt zwischen Sensorkopf und Polrad vergrößern kann.

DE 39 19 109 A1 zeigt einen herkömmlichen Stabsensor zur Drehzahlmessung, welcher mittels einer eine Reibkraft aufbringenden Klemmbuchse in einer Bohrung gehalten wird. Um ein unerwünschtes Wandern des Stabsensors, z.B. aufgrund von Schwingungen, zu verhindern, weist die Klemmbuchse axial gerichtete Krallen auf, die in die Mantelfläche des Stabsensors eingreifen und eine Axialbewegung des Stabsensors nur in Richtung des Polrads zulassen.

EP 2 322 811 A1 zeigt eine herkömmliche Haltevorrichtung zum wieder lösbaren Befestigen eines zylindrischen Körpers in einer Bohrung eines Halteteils, wobei diese Haltevorrichtung eine Klemmhülse mit Längsschlitzen und mit einem Außengewinde umfasst.

DE 197 58 075 A1 und DE 10 2007 008 744 A1 zeigen mögliche Sensoren, wie z.B. Ultraschallsensoren, zum Einbau in eine Stoßstange eines Kraftfahrzeugs.

Ferner erfolgt die Fertigung derartiger Sensorvorrichtungen in großen Serien, wodurch der Herstellungsaufwand nicht zu hoch sein darf.

Daher liegt der Erfindung die Aufgabe zugrunde, eine derartige Sensorvorrichtung zu verbessern, insbesondere bei gleichen oder geringeren Herstellungskosten.

Die Erfindung löst diese Aufgabe mit einer Sensorvorrichtung nach Anspruch 1, mit einer Sensoranordnung nach Anspruch 10, mit einem Raddrehzahlerfassungssystem nach Anspruch 11, mit einem Fahrzeug nach Anspruch 12, mit einem Verfahren zur Herstellung einer Sensorvorrichtung nach Anspruch 13 und mit der Verwendung einer Sensorvorrichtung nach Anspruch 15.

Die erfiridungsgemäße Sensorvorrichtung dient zur Erfassung einer Raddrehzahl eines Fahrzeugs und weist einen stabförmigen Sensorträger sowie einen in den Sensorträger eingebrachten Sensor auf, wobei die Sensorvorrichtung in eine Klemmbuchse festklemmbar ist. Zur Erfassung der Raddrehzahl wird die Drehung eines mit dem Rad mitdrehenden Polrades mittels des Sensors sensiert bzw. abgetastet.

Der erfindungsgemäße Sensorträger zeichnet sich zur Bildung dieses Sensorträgers durch eine Trägerstruktur aus einem nicht-ferromagnetischen Metall aus. Darüber hinaus dient die Trägerstruktur zur Aufnahme des Sensors und ermöglicht somit vorteilhaft eine genaue Positionierung des Sensors innerhalb der Sensorvorrichtung.

Des Weiteren weist der erfindungsgemäße Sensorträger eine Vergussmasse auf, beispielsweise einen Kunststoff, mit der die Trägerstruktur aufgefüllt wird.

Ferner weist der erfindungsgemäße Sensorträger eine Oberfläche auf, insbesondere eine Manteloberfläche, die eine Mehrzahl unterbrochener, metallischer Oberflächenbereiche der Trägerstruktur sowie mit der Vergussmasse ausgefüllte Bereiche aufweist.

Die erfindungsgemäße Sensorvorrichtung ist derart ausgebildet, um in einer herkömmlichen Klemmbuchse festgeklemmt zu werden. Dazu weist die Klemmbuchse federnde Zungen auf, die die eingeschobene Sensorvorrichtung berühren und diese auf jeweils gegenüberliegende Zungen drücken. Die daraus resultierenden Klemmkräfte sind so bemessen, dass einerseits die Sensorvorrichtung trotz mechanischer Schwingungen, Stöße und anderer Störkräfte in ihrer Lage gehalten wird und andererseits beim Gegenlaufen des Polrades ein axiales Verschieben der Sensorvorrichtung ohne Zerstörung möglich ist.

Eine mögliche Ausgestaltung einer herkömmlichen Klemmbuchse ist in DE 10 2007 056 340 A1 gezeigt. Die Erfindung ist jedoch nicht auf diese Ausgestaltung der Klemmbuchse beschränkt. Vielmehr sind jedwede Klemmmittel zum Festklemmen einer Sensorvorrichtung in einer Halteöffnung denkbar, die eine erfindungsgemäße Sensorvorrichtung aufnehmen können und axial verschiebbar festhalten können.

Um vorhandene Klemmbuchsen mit als federnde Zungen ausgebildete Klemmelemente weiterhin beim Einbau der Sensorvorrichtung zu verwenden, weist die Trägerstruktur des Sensorträgers mindestens zwei Oberflächenbereiche auf, die als Andruckflächen für die federnden Zungen ausgebildet sind, falls die Sensorvorrichtung in einer derartigen Klemmbuchse festgeklemmt ist. Die Anzahl der Andruckflächen sowie die Größenordnung der Andruckflächen sind dabei abhängig von der zu verwendenden Klemmbuchse bzw. von der Anordnung und Anzahl der federnden Zungen innerhalb der Klemmbuchse. Die Andruckflächen sind bevorzugt derart verteilt, dass die federnden Zungen der Klemmbuchse auf die Andruckflächen des Sensorträgers drücken.

Dadurch dass es sich bei den Andruckflächen um einzelne voneinander größtenteils getrennte Oberflächenbereiche handelt, wird ein besserer Halt der Sensorvorrichtung innerhalb der Klemmbuchse erreicht, da die Andruckflächen geringfügig nachgiebig sind. Ferner besitzt die unterbrochene Oberfläche der Trägerstruktur bessere Temperatureigenschaften und somit auch eine höhere Stabilität in der Klemmbuchse.

Die erfindungsgemäße. Sensorvorrichtung ist in Größe und Ausgestaltung an bestehende Systeme angepasst und kann vorteilhaft gegen vorhandene Sensorvorrichtungen ausgetauscht werden.

Gemäß einer bevorzugten Ausführungsform der Erfindung weist die Trägerstruktur der Sensorvorrichtung eine Führungsnase zum orientierten Einführen der Sensorvorrichtung in eine Klemmbuchse auf.

Die Klemmbuchse gemäß dem Stand der Technik hat die Form einer geschlitzten Hülse, um geringe Fertigungstoleranzen der Halteöffnung zu kompensieren und eine ausreichende Klemmwirkung innerhalb der Halteöffnung zu erzielen.

Zur Montage der erfindungsgemäßen Sensorvorrichtung wird diese derart in die Klemmbuchse geführt, dass die Führungsnase innerhalb des Schlitzes der Klemmbuchse verläuft. Durch die vorhandene Führungsnase wird eine vordefinierte Orientierung der Sensorvorrichtung in der Klemmbuchse erzwungen, wodurch der richtige Sitz der Andruckflächen auf den federnden Zungen der Klemmbuchse vorteilhaft gesichert ist. Daher ist eine fehlerfreie Montage der Sensorvorrichtung ohne großen Aufwand möglich.

In einer weiteren bevorzugten Ausführungsform der Erfindung ist die Trägerstruktur aus einem Trägerstreifen als ein Stanz-Biegeteil ausgebildet. Da die Herstellung der Sensorvorrichtung üblicherweise in hohen Stückzahlen erfolgt, ist eine kostengünstige Herstellung der Trägerstruktur in Form eines Stanzgitters vorteilhaft, welches mittels einer Stanz-Biegemaschine aus einem Blech herstellbar ist.

Eine weitere bevorzugte Ausführungsform der Erfindung weist mindestens zwei quer zur Sensorträgerlängsrichtung angeordnete Stabilisatoren innerhalb der Trägerstruktur auf. Diese Stabilisatoren sind zwischen den Andruckflächen angeordnet und sorgen vorteilhaft für einen konstanten Druck zwischen den Andruckflächen und den federnden Zungen der Klemmbuchse, insbesondere auch dann noch, wenn der innerhalb der Trägerstruktur eingespritzte Kunststoff alterungsbedingt schrumpfen sollte.

Die Stabilisatoren können separat in den Sensorträger eingebracht oder in der als Stanzgitter ausgebildeten Trägerstruktur bei der Herstellung berücksichtigt werden.

Bevorzugt sind die Stabilisatoren innerhalb des Sensorträgers derart angeordnet, dass sie sich im eingeführten Zustand der Sensorvorrichtung in die Klemmbuchse in Höhe der federnden Zungen der Klemmbuchse befinden.

Gemäß einer weiteren bevorzugten Ausführungsform der Erfindung weist die Trägerstruktur eine Sensorauflagefläche zur Befestigung des Sensors auf. Die Sensorauflagefläche ist innerhalb des Trägerstreifens vorgesehen und mit mindestens zwei Verbindungsstegen mit mindestens einer Andruckfläche verbunden. Dabei werden die Verbindungsstege innerhalb des Herstellungsprozesses derart gebogen, dass sich der auf der Sensorauflagefläche befindliche Sensor in radialer Richtung im Wesentlichen mittig innerhalb des Sensorträgers befindet.

Ferner weisen die Verbindungsstege im fertig gebogenen Zustand jeweils einen geschwungenen Abschnitt auf, insbesondere einen S-förmigen Abschnitt. Dieser geschwungene Abschnitt besitzt eine federnde Wirkung und sorgt vorteilhaft dafür, dass im Bereich des Sensors keine thermischen Spannungen auftreten.

In einer weiteren bevorzugten Ausführungsform der Erfindung weist die Trägerstruktur an der Stirnseite der Sensorvorrichtung eine vordere Abdeckfläche auf, welche im gebogenen Zustand der Trägerstruktur die Deckfläche des kreiszylinderförmig ausgebildeten Sensorträgers bildet. Diese Abdeckfläche ist zum Polrad hin gerichtet, wodurch der Sensorkopf aufgrund der metallischen Oberfläche ein geringes abrasives Verhalten durch den Kontakt zum Polrad aufweist und sich vorteilhaft eine längere Haltbarkeit der Sensorvorrichtung einstellt.

Ferner dient die Abdeckfläche vorteilhaft als Hitzeschild zwischen der Strahlungswärme der Bremsen und den im Innern des Sensorträgers befindlichen Sensors.

Gemäß einer weiteren bevorzugten Ausführungsform der Erfindung weist die Trägerstruktur eine Befestigungsfläche zur Befestigung von mindestens einem Anschlusskabel des Sensors auf. Dazu wird nach dem Befestigen des Sensors auf der Sensorauflagefläche die bzw. das Anschlusskabel des Sensors durch plastische Verformung der Ränder der Befestigungsfläche auf der Befestigungsfläche mechanisch befestigt. Dieses auch als Crimpen bezeichnete Fügeverfahren ist vorteilhaft schnell, kostengünstig und zuverlässig.

Ein weiteres bevorzugtes Ausführungsbeispiel der Erfindung sieht an mindestens einer Andruckfläche der Trägerstruktur mindestens eine Befestigungslasche vor. Diese Befestigungslaschen werden im Biegeverfahren der Trägerstruktur krallenförmig verbogen, um beim Auffüllen der Trägerstruktur mit der Vergussmasse vorteilhaft eine bessere Handhabung zu erzielen.

Gemäß einer weiteren bevorzugten Ausführungsform der Erfindung ist als Sensor im Sensorträger ein aktiver oder ein passiver Sensor zum Erfassen der Drehung des Polrades vorgesehen.

Aktive Sensoren funktionieren üblicherweise auf Basis magnetoresistiver Effekte und erfassen das Magnetfeld eines mit dem Rad rotierenden Polrades, wobei das Polrad häufig als permanent magnetischer Ring mit einer abwechselnden Folge von Nord- und Südpolmagnetisierungen ausgebildet ist. Zur Erfassung der Raddrehzahl wird der aktive Sensor mit einer definierten Spannung versorgt. Bei den magnetoresistiven Sensoren handelt es sich bevorzugt um AMR (Anisotrop Magneto Resistive) -Sensoren oder GMR (Giant Magneto Resistive) -Sensoren.

Alternativ handelt es sich bei dem aktiven Sensor um einen Hall-Sensor bzw. Hall-Effekt-Sensor zum Erfassen der Drehung des Polrades unter Nutzung des Hall-Effektes.

Bevorzugt ist der aktive Sensor lageunabhängig in Bezug auf Drehungen um die Längsachse, wodurch die Sensorvorrichtung mit der Klemmbuchse vorteilhaft in beliebiger Orientierung in die Halteöffnung klemmbar ist, wodurch aufwendige Justierarbeiten bei der Montage entfallen.

Die Verwendung von aktiven Sensoren zur Erfassung der Raddrehzahl hat den Vorteil, dass ein aktiver Sensor auch dann Messwerte liefert, wenn sich das Polrad sehr langsam dreht oder sogar stillsteht.

Alternativ dazu weist die Sensorvorrichtung einen passiven Sensor zum passiven Erfassen der Drehung des Polrades auf. Dazu enthält der Sensor einen Dauermagneten und eine Spule. Durch die Zahnung des Polrades wird der magnetische Fluss im Sensor proportional zur Drehgeschwindigkeit geändert und eine elektrische Wechselspannung erzeugt.

Grundsätzlich sind jedoch auch andere Arten von Sensoren einsetzbar.

Die erfindungsgemäße Sensoranordnung zur Erfassung einer Raddrehzahl eines Fahrzeugs weist eine erfindungsgemäße Sensorvorrichtung auf, die in eine Klemmbuchse festgeklemmt ist. Dabei weist die Klemmbuchse Klemmelemente auf, insbesondere federnde Zungen, die an den Andruckflächen der Sensorvorrichtung anliegen und somit für einen stabilen, festen Halt der Sensorvorrichtung in der Klemmbuchse sorgen.

Das erfindungsgemäße Raddrehzahlerfassungssystem weist mindestens eine erfindungsgemäß ausgebildete Sensorvorrichtung auf und wird bevorzugt in Fahrerassistenzsystemen von Fahrzeugen eingesetzt, welche für Steuerfunktionen und/oder Regelfunktionen die aktuelle Raddrehzahl benötigen, wie beispielsweise Antiblockiersystem (ABS), Abstandsregeltempomat (ACC), elektronisches Bremssystem (EBS) oder Überrollschutz (ARP).

Weiter weist das Raddrehzahlerfassungssystem eine Steuereinheit auf, die Signale oder Daten der Sensorvorrichtung bzw. Sensorvorrichtungen für Steuerfunktionen und/oder Regelfunktionen innerhalb des Fahrerassistenzsystems berücksichtigt.

Das erfindungsgemäße Fahrzeug ist insbesondere ein Nutzfahrzeug und weist die erfindungsgemäße Sensorvorrichtung und/oder die erfindungsgemäße Sensoranordnung mit der erfindungsgemäßen Sensorvorrichtung und/oder das erfindungsgemäße Raddrehzahlerfassungssystem mit der erfindungsgemäßen Sensorvorrichtung auf.

Gemäß dem erfindungsgemäßen Verfahren zur Herstellung einer derartigen Sensorvorrichtung zur Erfassung einer Raddrehzahl wird die Trägerstruktur zunächst aus einem Metallblech, insbesondere mittels eines Stanzverfahrens, hergestellt. Bevorzugt wird dabei die Trägerstruktur einstückig ausgestanzt, um die Herstellung gerade in hohen Stückzahlen zu vereinfachen.

Anschließend werden die Anschlusskabel an den Sensor befestigt, insbesondere mittels Löten oder Schweißen. Die Erfindung ist jedoch nicht auf die vorstehend genannte Reihenfolge beschränkt. Vielmehr können die Anschlusskabel auch nach dem Befestigen des Sensors angebracht werden, wobei ersteres Vorgehen dem vorzuziehen ist, weil bei einem Löt- oder Schweißvorgang zum Befestigen der Anschlusskabel nach dem Befestigen des Sensors die Klebung des Sensors beschädigen könnte.

Der Sensor wird dann in die Trägerstruktur eingelegt und auf der Sensorauflagefläche der Trägerstruktur befestigt, wobei die Befestigung bevorzugt mittels Klebstoff erfolgt. Die Befestigung des Sensors direkt auf der Trägerstruktur ermöglicht vorteilhaft eine genaue Positionierung des Sensors innerhalb des Sensorträgers.

Dann erfolgt die Befestigung des Anschlusskabels des Sensors auf der Befestigungsfläche der Trägerstruktur. Die Befestigung der Kabel erfolgt bevorzugt mittels Crimpen.

In einem nächsten Arbeitsschritt wird die Trägerstruktur derart gebogen, dass die Sensorvorrichtung im Wesentlichen stabförmig ausgebildet ist. Die Größenordnung der Sensorvorrichtung wird durch die zu verwendende Klemmbuchse vorgegeben. Durch die Verwendung einer bekannten Klemmbuchse kann die erfindungsgemäße Sensorvorrichtung leicht und kostengünstig gegen herkömmlich verwendete Stabsensoren in bestehenden Systemen ausgetauscht werden.

Schließlich wird die Trägerstruktur mit einer Vergussmasse, insbesondere Kunststoff bzw. Kunstharz, aufgefüllt, um der Sensorvorrichtung die entsprechende mechanische Stabilität zu geben.

Eine bevorzugte Ausführungsform der Erfindung sieht vor, den Sensor vor dem Biegen der Trägerstruktur zum Schutz mit einer anderen, halbkugelförmig den Sensor umschließende Vergussmasse, insbesondere Silikon, zu überziehen. Dieses auch als "Glob-Top"-Verfahren bezeichnete Verfahren sorgt vorteilhaft dafür, dass der Sensor von der eigentlichen Vergussmasse, die den Sensorträger ausfüllt, unberührt bleibt. Dadurch ist der Sensor thermisch geschützt und hält seine Position auch bei einem möglichen Schwinden bzw. Schrumpfen der Vergussmasse.

Schließlich betrifft die Erfindung die Verwendung einer Sensorvorrichtung zur Erfassung einer Raddrehzahl eines Fahrzeugs. Dabei ist die Sensorvorrichtung erfindungsgemäß ausgebildet und kann in einem erfindungsgemäßen Raddrehzahlerfassungssystem bzw. in einem erfindungsgemäßen Fahrzeug eingesetzt werden.

Weitere Ausführungsformen ergeben sich aus den Ansprüchen sowie aus den anhand der Zeichnung näher erläuterten Ausführungsbeispielen. In der Zeichnung zeigen:
- Fig. 1: eine schematische Schnittdarstellung durch eine Sensorvorrichtung,
- Fig. 2: eine schematische Darstellung einer Trägerstruktur als StanzBiegeteil,
- Fig. 3: eine schematische Darstellung der Stirnseite der Sensoranordnung und
- Fig. 4: ein Blockschaltbild zur Erläuterung des erfindungsgemäßen Verfahrens zum Herstellen einer Sensorvorrichtung.

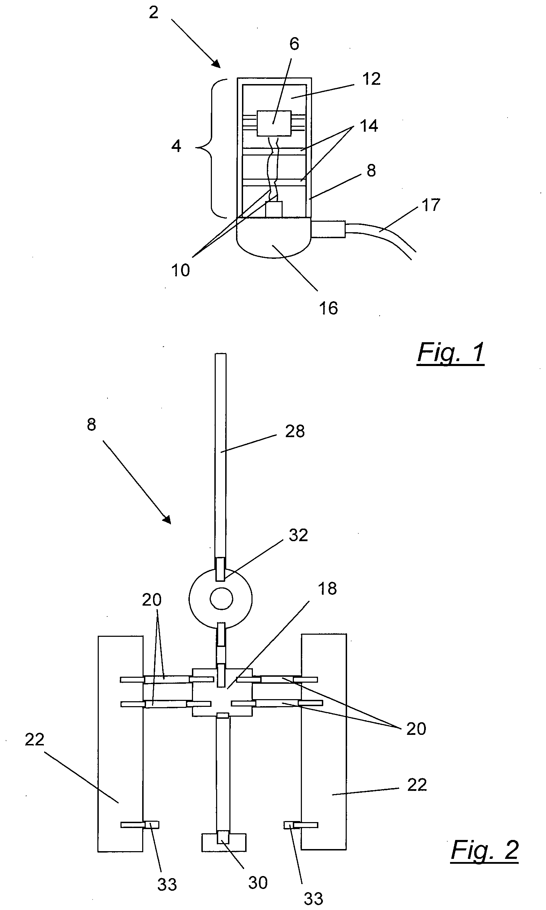

Fig. 1 zeigt eine Sensorvorrichtung 2 gemäß einem Ausführungsbeispiel der Erfindung. Die gezeigte Sensorvorrichtung 2 ist zur Erfassung der Raddrehzahl an einem Fahrzeug geeignet und als ein Stabsensor ausgebildet. Dabei ist die Größenordnung der Sensorvorrichtung 2 an die zur Montage verwendete Klemmbuchse angepasst. Fig. 1 zeigt dabei eine Schnittdarstellung durch die Längsachse der Sensorvorrichtung 2.

Die Sensorvorrichtung 2 weist einen im Wesentlichen stabförmigen bzw. kreiszylinderförmig ausgebildeten Sensorträger 4 sowie einen in den Sensorträger 4 eingebrachten Sensor 6 auf. Der Sensorträger 4 wird durch eine metallische Trägerstruktur 8 gebildet, insbesondere aus einem nicht-ferromagnetischen Metall. Die Trägerstruktur 8 bildet die Halterung für den Sensor 6 und dessen Anschlusskabel 10.

Im Innern der Trägerstruktur 8 ist der Sensorträger 4 mit einer Vergussmasse 12 aufgefüllt, wodurch die Sensorvorrichtung 2 die nötige mechanische Stabilität erreicht. Zur Erhöhung der Stabilität sind in den Sensorträger 4 zusätzlich mehrere Stabilisatoren 14 eingebracht.

Die Oberfläche, insbesondere die Manteloberfläche, des Sensorträgers 4 wird durch eine Mehrzahl unterbrochener, metallischer Oberflächenbereiche der Trägerstruktur 8 sowie durch mit der Vergussmasse 12 ausgefüllte Bereiche gebildet.

Von Unten ist der Sensorträger 4 durch einen Kunststoffkopf 16 verschlossen, aus dem ein elektrisches Anschlusskabel 17 aus der Sensorvorrichtung 2 geführt wird.

Fig. 2 zeigt eine schematische Darstellung einer Abwicklung der Trägerstruktur 8 als ein Stanz-Biegeteil vor dem Biegevorgang. Dabei ist zu beachten, dass es sich hierbei lediglich um eine schematische Skizze handelt, die die Trägerstruktur 8 nicht unbedingt maßstabsgetreu wiedergibt.

In der Mitte befindet sich die Sensorauflagefläche 18 zur Befestigung des Sensors 6. Die Sensorauflagefläche 18 ist über jeweils zwei Verbindungsstege 20 auf beiden Seiten mit einer Andruckfläche 22 verbunden.

Die Ausgestaltung der Andruckfläche 22 richtet sich nach der Ausgestaltung der zur Montage zu verwendenden Klemmbuchse.

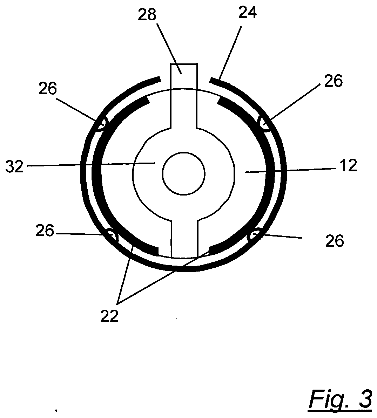

Fig. 3 zeigt eine schematische Darstellung der Stirnseite der Sensoranordnung 2 mit einer in eine Klemmbuchse 24 eingeführte Sensorvorrichtung 2. Üblicherweise weisen derartige Klemmbuchsen 24 mehrere Klemmelemente 26 auf, insbesondere federnde Zungen, um eine ausreichende Haltekraft gegenüber der Sensorvorrichtung 2 zu erzielen. Die Andruckflächen 22 sind nun derart zu dimensionieren, dass im montierten Zustand ausreichend federnde Zungen 26 an den Andruckflächen 22 anliegen, um die Sensorvorrichtung 2 in der Klemmbuchse 24 festzuklemmen. Dabei kann die Trägerstruktur 8 wie in Fig. 2 dargestellt zwei Andruckflächen 22 aufweisen oder auch drei Andruckflächen oder vier Andruckflächen.

Um die genaue Positionierung der Andruckflächen 22 an den Klemmelementen 26 zu gewährleisten, weist die Sensorvorrichtung 2 eine Führungsnase 28 auf, die beim Einführen der Sensorvorrichtung 2 in die Klemmbuchse 24 in einem Schlitz in der Klemmbuchse 24 geführt wird.

Ferner ist die Sensorauflagefläche 18 gemäß Fig. 2 über einen Steg mit der Befestigungsfläche 30 verbunden. Auf der Befestigungsfläche 30 wird das Anschlusskabel 10 des Sensors 6 befestigt. Bevorzugt erfolgt das Befestigen kostengünstig mittels eines Crimp-Verfahrens bei dem die Seiten der Befestigungsfläche 30 nach oben über das Anschlusskabel 10 gebogen werden.

Oberhalb der Sensorauflagefläche 18 befindet sich eine vordere Abdeckfläche 32, welche in gebogenem Zustand die Stirnseite der Sensorvorrichtung 2 bildet und im montierten Zustand zum Polrad gerichtet ist. Das in Fig. 2 und Fig. 3 dargestellte Loch innerhalb der vorderen Abdeckfläche 32 stellt vorteilhaft eine Montagehilfe dar bzw. erleichtert die Werkzeugpositionierung bei der Herstellung und Montage.

Die Verlängerung oberhalb der vorderen Abdeckfläche 32 bildet im gebogenen Zustand die Führungsnase 28 zum orientierten Einführen der Sensorvorrichtung 2 in die Klemmbuchse 24. Dazu verläuft die Führungsnase 28 über die Längsseite des Sensorträgers 4 und weist einen leichten Knick bevorzugt im vorderen Drittel des Sensorträgers 4 auf.

Die Führungsnase 28 sorgt dafür, dass die federnden Zungen 26 der Klemmbuchse 24 auf den Andruckflächen 22 anliegen und nicht dazwischen auf der Vergussmasse 12. Eine Berührung zwischen Metall und Metall sorgt nämlich vorteilhaft für einen lang andauernden Halt, wohingegen eine Berührung der federnden Zungen mit dem Kunststoff der Vergussmasse 12 im Laufe der Zeit nachgeben würde.

Schließlich weist die Trägerstruktur 8 an den Andruckflächen 22 mögliche Befestigungslaschen 33 auf. Die Befestigungslaschen 33 können beliebig gebogen und angeordnet sein und dienen zur besseren Handhabung beim Auffüllen des Sensorträgers 4 mit der Vergussmasse 12.

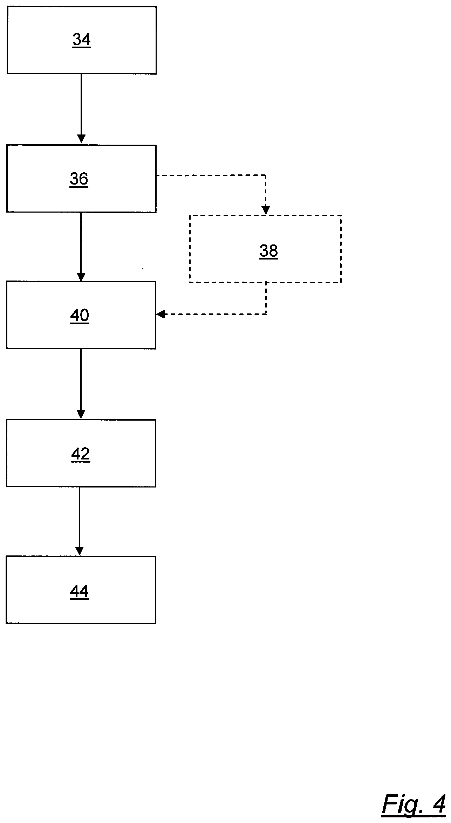

Fig. 4 zeigt ein Blockschaltbild zur Erläuterung des erfindungsgemäßen Verfahrens zum Herstellen einer Sensorvorrichtung 2.

Zunächst wird in einem ersten Schritt 34 die Trägerstruktur 8 aus einem Metallblech ausgestanzt. Dabei handelt es sich bevorzugt bei dem Blech um ein nichtferromagnetisches Metall. Mittels Stanz-Biegemaschinen lassen sich einlagige Stanzgitter erstellen, die durch das Biegen eine dreidimensionale Struktur erhalten.

In einem nächsten Schritt 36 wird der Sensor 6 auf der Sensorauflagefläche 18 der Trägerstruktur 8 mittels Klebstoff befestigt. Bevorzugt werden vor dem Befestigen des Sensors 6 auf der Sensorauflagefläche 18 die Anschlusskabel 10 an dem Sensor 6 befestigt, bspw. durch Löten oder Schweißen.

Optional wird das Glob-Top-Verfahren 38 eingesetzt, um den Sensor 6 vor der Umgebung zu schützen. Dazu wird ein dicker Tropfen einer viskosen Vergussmasse, insbesondere Silikon, auf den Sensor 6 bzw. die Sensorschaltung getropft. Der Tropfen verläuft bis die ganze Sensorauflagefläche 18 mit Sensor 6 bedeckt ist.

Anschließend erfolgt in einem Schritt 40 die Befestigung des Anschlusskabels 10 bzw. der Anschlusskabel 10 des Sensors 6 auf der Befestigungsfläche 30 der Trägerstruktur 8. Dabei bildet die Befestigungsfläche 30 bereits die Grundlage für die Verbindung, indem die Seiten der Befestigungsfläche 30 um die Anschlusskabel 10 umgebogen werden. Das auch als Crimpen bezeichnete Fügeverfahren bietet eine schwer lösbare Verbindung, die eine hohe mechanische Sicherheit gewährleistet.

Das Verfahren bietet den Vorteil, dass der Sensor 6 und die Anschlusskabel 10 besonders schnell, einfach und präzise auf der Trägerstruktur 8 befestigt werden können, da die Trägerstruktur 8 zum Zeitpunkt der Befestigung noch flächig ausgebildet ist.

Sind der Sensor 6 und die Anschlusskabel 10 mit der Trägerstruktur 8 fest verbunden, erfolgt in einem Biegeschritt 42 das Biegen der Trägerstruktur 8. Die fertig gebogene Trägerstruktur 8 gibt die stabartige Form der Sensorvorrichtung 2 an, wobei die Größenordnung der Sensorvorrichtung 2 durch die zu verwendende Klemmbuchse 24 vorgegeben wird.

Die gebogene Trägerstruktur 8 bildet eine im Wesentlichen stabförmige bzw. kreiszylinderförmige Käfigstruktur, dadurch, dass die Oberfläche der Trägerstruktur 8 nicht geschlossen ist. Die offenen Bereiche der Oberfläche sind wesentlich für die Erfindung, da sie für bessere Temperatureigenschaften der Sensorvorrichtung 2 sorgen.

Schließlich wird in einem letzten Schritt 44 die Trägerstruktur 8 mit einer Vergussmasse 12 gefüllt. Die flüssige Vergussmasse 12 wird in die Trägerstruktur 8 gegossen, wobei sich die Trägerstruktur 8 in einer entsprechenden Form befindet, oder wobei deren unterbrochene Oberflächenbereiche für den Gießvorgang abgedichtet sind, so dass die Vergussmasse 12 nicht durch die Öffnungen entweichen kann.

Für den Fall, dass beim Stanzen der Trägerstruktur 8 keine Bereiche, die die Stabilisatoren 14 bilden, berücksichtigt worden sind, werden vor dem Einfüllen der Vergussmasse 12 mindestens zwei Stabilisatoren 14 in den Sensorträger 4 eingebracht, um einen konstanten Abstand zwischen den Andruckflächen 22 zu gewährleisten.

Zur Montage der Sensorvorrichtung 2 wird eine bekannte Klemmbuchse 24 in beliebiger Orientierung bezüglich der Längsachse in eine dafür vorgesehene Halteöffnung geschoben. Anschließend wird eine erfindungsgemäße Sensorvorrichtung 2 in die Klemmbuchse 24 eingeführt. Die Klemmbuchse 24 weist mehrere Klemmelemente 26 auf, welche eine Klemmkraft auf die Sensorvorrichtung 2 aufbringen und diese somit in der Halteöffnung hält.

Beim Einschieben der Sensorvorrichtung 2 in die Klemmbuchse 24 gibt die Führungsnase 28 der Sensorvorrichtung 2 die Richtung vor, indem die Führungsnase 28 innerhalb eines Schlitzes in der Klemmbuchse 24 verläuft. Die Führungsnase 28 gewährleistet, dass die Klemmelemente 26 der Klemmbuchse 24 an den Andruckflächen 22 der Sensorvorrichtung 2 anliegen.

Die erfindungsgemäße Sensorvorrichtung 2 ist demnach kostengünstig in der Herstellung und funktionssicher auch bei starken Temperaturschwankungen. Die Käfigstruktur mit den offenen Oberflächenbereichen sorgt vorteilhaft für einen festen Sitz der Andruckflächen 22 in der Klemmbuchse 24, auch wenn der Kunststoff der Vergussmasse 12 geringfügig schrumpfen sollte.

Ferner liefert die erfindungsgemäße Sensorvorrichtung 2 auch dann noch genaue Messwerte, wenn der Kunststoff bzw. die Vergussmasse 12 ungewollt schwingen sollte, da der Sensor 6 fest an der Trägerstruktur 8 befestigt ist.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar.

## Patentansprüche

1. Sensoranordnung zur Erfassung einer Raddrehzahl eines Fahrzeugs, wobei die Sensoranordnung eine Klemmbuchse (24) sowie eine in die Klemmbuchse (24) festgeklemmte Sensorvorrichtung (2) aufweist,
wobei die Sensorvorrichtung (2) einen stabförmigen Sensorträger (4) sowie einen in den Sensorträger (4) eingebrachten Sensor (6) aufweist, welcher zur Erfassung der Raddrehzahl die Drehung eines mit dem Rad mitdrehenden Polrades sensiert,
wobei der Sensorträger (4) durch eine metallische Trägerstruktur (8) zur Aufnahme des Sensors (6) gebildet wird,
wobei der Sensorträger (4) eine Vergussmasse (12) aufweist, welche derart ausgestaltet ist, um die Trägerstruktur (8) aufzufüllen,
wobei der Sensorträger (4) eine Oberfläche aufweist, insbesondere Manteloberfläche, des stabförmigen Sensorträgers (4), die eine Mehrzahl unterbrochener, metallischer Oberflächenbereiche der Trägerstruktur (8) sowie mit der Vergussmasse (12) ausgefüllte Bereiche aufweist,
wobei die Trägerstruktur (8) des Sensorträgers (4) mindestens zwei metallische Oberflächenbereiche aufweist, die als Andruckflächen (22) für federnde Zungen der Klemmbuchse (24) ausgebildet sind, wenn die Sensorvorrichtung in dieser Klemmbuchse (24) festgeklemmt ist,
wobei die Klemmbuchse (24) Klemmelemente (26) aufweist, die an den Andruckflächen (22) der Sensorvorrichtung (2) anliegen.

2. Sensoranordnung nach Anspruch 1,
**gekennzeichnet durch**
eine Ausgestaltung der Trägerstruktur (8) mit einer Führungsnase (28) zum orientierten Einführen der Sensorvorrichtung (2) in eine vorhandene Klemmbuchse.

3. Sensoranordnung nach Anspruch 1 oder 2,
**dadurch gekennzeichnet, dass**
die Trägerstruktur (8) aus einem Trägerstreifen als ein Stanz-Biegeteil ausgebildet ist.

4. Sensoranordnung nach einem der vorhergehenden Ansprüche, **gekennzeichnet durch**
mindestens zwei quer zur Sensorträgerlängsrichtung zwischen den Andruckflächen (22) der Trägerstruktur (8) angeordnete Stabilisatoren (14).

5. Sensoranordnung nach einem der vorhergehenden Ansprüche, **gekennzeichnet durch**
eine Sensorauflagefläche (18) innerhalb der Trägerstruktur (8) zur Befestigung des Sensors (6).

6. Sensoranordnung nach einem der vorhergehenden Ansprüche, **gekennzeichnet durch**
eine vordere Abdeckfläche (32) der Trägerstruktur (8) an der Stirnseite der Sensorvorrichtung (2), wobei die Abdeckfläche (32) im gebogenen Zustand der Trägerstruktur (8) eine Deckfläche des Sensorträgers (4) bildet.

7. Sensoranordnung nach einem der vorhergehenden Ansprüche, **gekennzeichnet durch**
eine Befestigungsfläche (30) innerhalb der Trägerstruktur (8) zur Befestigung von mindestens einem Anschlusskabel (10) des Sensors (6).

8. Sensoranordnung nach einem der vorhergehenden Ansprüche, **gekennzeichnet durch**
mindestens eine Befestigungslasche (33) an mindestens einer Andruckfläche (22) der Trägerstruktur (8).

9. Sensoranordnung nach einem der vorhergehenden Ansprüche,
**dadurch gekennzeichnet, dass**
der Sensor (6) ein im Sensorträger (4) angeordneter aktiver Sensor (6) oder passiver Sensor (6) zum Erfassen der Drehung des Polrades ist.

10. Raddrehzahlerfassungssystem, insbesondere für Fahrerassistenzsysteme in Fahrzeugen, wobei das Raddrehzahlerfassungssystem mindestens eine nach einem der Ansprüche 1 bis 9 ausgebildete Sensoranordnung zur Erfassung der Raddrehzahl aufweist, und wobei das Raddrehzahlerfassungssystem eine Steuereinheit aufweist, die Signale oder Daten der Sensorvorrichtung (2) für Steuerfunktionen und/oder Regelfunktionen innerhalb eines Fahrerassistenzsystems berücksichtigt.

11. Fahrzeug mit einer Sensoranordnung nach einem der Ansprüche 1 bis 9 und/oder
mit einem Raddrehzahlerfassungssystem nach Anspruch 10.

12. Verwendung einer Sensoranordnung zur Erfassung einer Raddrehzahl eines Fahrzeugs nach einem der Ansprüche 1-9, und/oder Verwendung eines Raddrehzahlerfassungssystem gemäß Anspruch 10 und/oder Verwendung eines Fahrzeugs gemäß Anspruch 11.

## Claims

1. Sensor arrangement for detecting a wheel speed of a vehicle, wherein the sensor arrangement comprises a clamping bush (24) and a sensor device (2), which is clamped into the clamping bush (24), wherein the sensor device (2) has a rod-shaped sensor carrier (4) and a sensor (6) which is introduced into the sensor carrier (4) and, in order to detect the wheel speed, senses the rotation of a rotor rotating together with the wheel,
wherein the sensor carrier (4) is formed by a metal support structure (8) for accommodating the sensor (6),
wherein the sensor carrier (4) comprises a sealing compound (12) which is designed to fill the support structure (8),
wherein the sensor carrier (4) comprises a surface, in particular a lateral surface, of the rod-shaped sensor carrier (4), which has a plurality of interrupted, metal surface areas of the support structure (8) and has areas filled with the sealing compound (12),
wherein the support structure (8) of the sensor carrier (4) comprises at least two metal surface areas, which are in the form of contact surfaces (22) for resilient tongues of the clamping bush (24) when the sensor device is clamped in said clamping bush (24),
wherein the clamping bush (24) has clamping elements (26), which rest against the contact surfaces (22) of the sensor device (2).

2. Sensor arrangement according to Claim 1,
**characterized by**
a configuration of the support structure (8) having a guide projection (28) for the oriented insertion of the sensor device (2) into an available clamping bush.

3. Sensor arrangement according to Claim 1 or 2,
**characterized in that**
the support structure (8) is formed from a carrier strip, as a stamped and bent part.

4. Sensor arrangement according to any one of the preceding claims,
**characterized by**
at least two stabilizers (14) which are disposed, transversely to the longitudinal direction of the sensor carrier, between the contact surfaces (22) of the support structure (8).

5. Sensor arrangement according to any one of the preceding claims,
**characterized by**
a sensor supporting surface (18) within the support structure (8) for attaching the sensor (6).

6. Sensor arrangement according to any one of the preceding claims,
**characterized by**
a front cover surface (32) of the support structure (8) on the front face of the sensor device (2), wherein the cover surface (32) forms a cover surface of the sensor carrier (4) in the bent state of the support structure (8).

7. Sensor arrangement according to any one of the preceding claims,
**characterized by**
an attachment surface (30) within the support structure (8) for attaching at least one connecting cable (10) of the sensor (6).

8. Sensor arrangement according to any one of the preceding claims,
**characterized by**
at least one attachment tab (33) on at least one contact surface (22) of the support structure (8).

9. Sensor arrangement according to any one of the preceding claims,
**characterized in that**
the sensor (6) is an active sensor (6) or a passive sensor (6) disposed in the sensor carrier (4) for detecting the rotation of the rotor.

10. Wheel speed detection system, in particular for driver assistance systems in vehicles, wherein the wheel speed detection system comprises at least one sensor arrangement for detecting the wheel speed, which is designed according to any one of Claims 1 to 9, and wherein the wheel speed detection system comprises a control unit, which takes into account signals or data from the sensor device (2) for open-loop control functions and/or closed-loop control functions within a driver assistance system.

11. Vehicle comprising a sensor arrangement according to any one of claims 1 to 9, and/or
comprising a wheel speed detection system according to Claim 10.

12. Use of a sensor arrangement for detecting a wheel speed of a vehicle according to any one of Claims 1 to 9 and/or use of a wheel speed detection system according to Claim 10 and/or use of a vehicle according to Claim 11.

## Revendications

1. Arrangement capteur destiné à détecter une vitesse de rotation de roue d'un véhicule, l'arrangement capteur possédant une douille de serrage (24) ainsi qu'un dispositif capteur (2) serré dans la douille de serrage (24),
le dispositif capteur (2) possédant un porte-capteur (4) en forme de tige ainsi qu'un capteur (6) logé dans le porte-capteur (4), lequel détecte la rotation d'un roue polaire qui accompagne la rotation de la roue en vue de détecter la vitesse de rotation de roue,
le porte-capteur (4) étant formé par une structure porteuse (8) métallique destinée à accueillir le capteur (6),
le porte-capteur (4) possédant une masse de scellement (12) qui est configurée de manière à remplir autour de la structure porteuse (8),
le porte-capteur (4) possédant une surface, notamment une enveloppe, du porte-capteur (4) qui possède une pluralité de zones de surface métalliques interrompues de la structure porteuse (8) ainsi que des zones remplies de la masse de scellement (12),
la structure porteuse (8) du porte-capteur (4) possédant au moins deux zones de surface métalliques qui sont réalisées sous la forme de surfaces de pressage (22) pour des languettes élastiques de la douille de serrage (24) lorsque le dispositif capteur est serré dans cette douille de serrage (24),
la douille de serrage (24) possédant des éléments de serrage (26) qui reposent contre les surfaces de pressage (22) du dispositif capteur (2).

2. Arrangement capteur selon la revendication 1, **caractérisé par** une configuration de la structure porteuse (8) avec un tenon de guidage (28) servant à l'introduction orientée du dispositif capteur (2) dans une douille de serrage présente.

3. Arrangement capteur selon la revendication 1 ou 2, **caractérisé en ce que** la structure porteuse (8) est réalisée sous la forme d'une pièce emboutie et cintrée à partir d'une bande porteuse.

4. Arrangement capteur selon l'une des revendications précédentes, **caractérisé par** au moins deux stabilisateurs (14) disposés transversalement par rapport au sens longitudinal du porte-capteur entre les surfaces de pressage (22) de la structure porteuse (8).

5. Arrangement capteur selon l'une des revendications précédentes, **caractérisé par** une surface d'appui de capteur (18) à l'intérieur de la structure porteuse (8) servant à la fixation du capteur (6).

6. Arrangement capteur selon l'une des revendications précédentes, **caractérisé par** une surface de protection (32) avant de la structure porteuse (8) au niveau du côté frontal du dispositif capteur (2), la surface de protection (32) formant, à l'état cintré de la structure porteuse (8), une surface de recouvrement du porte-capteur (4).

7. Arrangement capteur selon l'une des revendications précédentes, **caractérisé par** une surface de fixation (30) à l'intérieur de la structure porteuse (8) servant à la fixation d'au moins un câble de raccordement (10) du capteur (6).

8. Arrangement capteur selon l'une des revendications précédentes, **caractérisé par** au moins une patte de fixation (33) au niveau d'au moins une surface de pressage (22) de la structure porteuse (8).

9. Arrangement capteur selon l'une des revendications précédentes, **caractérisé en ce que** le capteur (6) est un capteur (6) actif ou un capteur (6) passif disposé dans le porte-capteur (4) et servant à détecter la rotation de la roue polaire.

10. Système de détection de vitesse de rotation de roue, notamment pour des systèmes d'assistance au conducteur dans des véhicules, le système de détection de vitesse de rotation de roue possédant au moins un arrangement capteur destiné à détecter une vitesse de rotation de roue configuré selon l'une des revendications 1 à 9, et le système de détection de vitesse de rotation de roue possédant une unité de commande qui tient compte des signaux ou des données du dispositif capteur (2) pour des fonctions de commande et/ou des fonctions de régulation au sein d'un système d'assistance au conducteur.

11. Véhicule équipé d'un arrangement capteur selon l'une des revendications 1 à 9 et/ou équipé d'un système de détection de vitesse de rotation de roue selon la revendication 10.

12. Utilisation d'un arrangement capteur destiné à détecter une vitesse de rotation de roue selon l'une des revendications 1 à 9 et/ou utilisation d'un système de détection de vitesse de rotation de roue selon la revendication 10 et/ou utilisation d'un véhicule selon la revendication 11.
